# EUROPÄISCHE PATENTSCHRIFT

(11) **EP 3 583 360 B1**
(45) Veröffentlichungstag und Bekanntmachung des Hinweises auf die Patenterteilung: **22.05.2024**
(21) Anmeldenummer: 18706180.9
(22) Anmeldetag: 06.02.2018
(51) Int. Cl.: A01K 1/00, F24F 6/04, F24F 8/117, F24F 8/125, F24F 5/00, F28F 25/08

(54) **RIESELKÖRPER**
TRICKLE STRUCTURES
CORPS COULANTS

(30) Priorität: 14.02.2017 DE 102017001377
(43) Veröffentlichungstag der Anmeldung: 25.12.2019
(73) Patentinhaber: Barnstorfer Kunststofftechnik GmbH & Co. KG, 49406 Barnstorf (DE)
(72) Erfinder: SCHUMACHER, Egon, 49406 Barnstorf (DE)
(74) Vertreter: Meissner Bolte Partnerschaft mbB
(86) Internationale Anmeldenummer: PCT/EP2018/000048
(87) Internationale Veröffentlichungsnummer: WO 2018/149545

(56) Entgegenhaltungen:
- WO-A1-2009/153278
- WO-A2-01/20241
- DE-U1-202006 018 753
- NL-A- 7 803 456
- US-A- 3 599 943
- US-A- 3 963 810
- US-A1- 2005 120 688
- US-A1- 2009 320 689

## Beschreibung

Die Erfindung betrifft Rieselkörper zur Klimatisierung von Gebäuden, vorzugsweise Ställen, gemäß dem Oberbegriff des Anspruchs 1.

Solche Rieselkörper, auch Kontaktkörper, Verdunstungskörper oder Einbaukörper genannt, werden verwendet, um Räume, insbesondere Ställe, durch Befeuchtung und/ oder Kühlung zu klimatisieren. Auch können solche Rieselkörper zur Reinigung von Gebäudeluft, insbesondere Stallluft, dienen. Die Befeuchtung, Kühlung und/oder Reinigung geschieht nach dem Verdunstungsprinzip. Dazu werden Wasser oder andere Flüssigkeiten dem Rieselkörper zugeführt. Im Folgenden wird nur noch von Wasser gesprochen, was die Verwendung anderer Flüssigkeiten aber nicht ausschließen soll.

Das Wasser durchströmt die Rieselkörper und fließt dabei in und/oder an diesen nach unten ab. Das begünstigt die Verdunstung des Wassers, was zur gewünschten Befeuchtung und Kühlung von Gebäuden, vor allem Ställen, und gegebenenfalls auch zur Reinigung der Luft in Gebäuden und Ställen führt.

Aus der US 3 599 943 A ist es bekannt, Rieselkörper aus mehreren nebeneinander angeordneten Lagen einzelner Plattenelemente zu bilden. Die Plattenelemente weisen Vertiefungen und Erhebungen auf. Die Vertiefungen und Erhebungen sind im Bereich gegenüberliegender aufrechter Seitenränder der Plattenelemente mit Perforationen versehen. Dabei weisen die Plattenelemente zum einen Teil geschlossene und zum anderen Teil durchlässige Wandungen auf. Die Erhebungen und Vertiefungen verlaufen geradlinig, geneigt zwischen den gegenüberliegenden aufrechten Seitenrändern des Rieselkörpers. Dadurch läuft zur Befeuchtung der Rieselkörper dienende Flüssigkeit rasch durch die geradlinigen, schräggerichteten Erhebungen und Vertiefungen zu einem Längsseitenrand des Rieselkörpers ab. Die zugeführte Flüssigkeit kann dadurch nur unzureichend verdampfen, was die Wirksamkeit dieses bekannten Rieselkörpers beeinträchtigt. Außerdem sind bei diesem bekannten Rieselkörper keinerlei Maßnahmen zur Erhöhung seiner Stabilität vorgesehen.

Die WO 2009/153278 A1 offenbart einen Rieselkörper aus mehreren nebeneinander angeordneten Lagen einzelner Plattenelemente. Die wellenförmig ausgebildeten Plattenelemente weisen Vertiefungen und Erhebungen auf, die über ihre gesamte Länge wasserdurchlässige Strömungskanäle bilden. Diese haben zur Folge, dass ein Großteil der zur Beleuchtung dienenden Flüssigkeit wirkungslos durch den bekannten Rieselkörper hindurchfließt. Außerdem haben die über ihre gesamte Länge größtenteils netzartig ausgebildeten Strömungskanäle eine Verringerung der Stabilität des bekannten Rieselkörpers zur Folge.

Der Erfindung liegt deshalb die Aufgabe zugrunde, einen Rieselkörper zu schaffen, der eine verbesserte Verdunstungsleistung und hohe Stabilität aufweist.

Ein Rieselkörper zur Lösung dieser Aufgabe weist die Merkmale des Anspruchs 1 auf. Die einzelnen plattenartigen Schichtelemente dieser Rieselkörper verfügen über eine teilweise offene, gitterartige bzw. netzartige und teilweise geschlossene Fläche. Es sind dadurch auch die aufgrund der Wellung der Schichtelemente gebildeten Wellentäler und Wellenberge zum einen Teil geschlossen und zum anderen Teil gitter- oder netzartig und somit durchlässig. Vorzugsweise zwischen benachbarten Schichtelementen durch ihre Wellung gebildete Strömungskanäle weisen zum einen Teil geschlossene und zum anderen Teil durchlässige, gitter- oder netzartige Wandungen auf. Durch die abwechselnd geschlossenen und durchlässigen Flächen bzw. Wandungen hat es sich gezeigt, dass solchermaßen ausgebildete Rieselkörper über bessere Klimatisierungseigenschaften bzw. eine bessere Verdunstungsleistung verfügen. Außerdem sind solche Rieselkörper stabiler, was insbesondere vorteilhaft ist, wenn sie übereinandergestapelt werden.

Es ist vorgesehen, dass die Wellen, vorzugsweise alle Wellentäler und Wellenberge, des jeweiligen Schichtelements trapezförmige Querschnitte mit jeweils zwei gegensinnig schräg geneigten Schenkeln, die durch einen gemeinsamen Steg verbunden sind, aufweisen und nur die schräg geneigten Schenkel der Wellen, insbesondere Wellentäler und/oder Wellenberge, zu einem Teil geschlossen und zum anderen Teil durchlässig ausgebildet sind. Dadurch wird ein optimaler Stoffaustausch gewährleistet.

Weiterhin ist es vorgesehen sein, dass die durchlässig ausgebildeten Strömungskanäle und/oder Wellentäler und/oder Wellenberge der Schichtelemente netz- und/oder gitterartig ausgebildet oder durch eine Netz- und/oder Gitterstruktur gebildet sind. Dadurch wird die Stabilität der Schichtelemente und des daraus gebildeten Rieselkörpers durch die durchlässig ausgebildeten Teile der Schichtelemente bzw. ihrer Strömungskanäle, Wellentäler und/oder Wellenberge nicht nennenswert geschwächt.

Bevorzugt ist es vorgesehen, dass eine Längserstreckungsrichtung der Wellentäler und der Wellenberge quer zu den vorzugsweise stehend angeordneten Schichtelementen verläuft. Insbesondere verlaufen die Wellentäler und Wellenberge durchgehend zwischen parallelen aufrechten Längsrändern der Schichtelemente. Dadurch kann das Wasser vorzugsweise von oben in die Rieselkörper eingeleitet werden und so an den teils gelochten und teils gitter- bzw. netzartigen Flächen bzw. Wandungen der Schichtelemente und/oder Wellentäler sowie Wellenberge herunterrieseln.

Durch die teils geschlossenen und teils durchlässigen Wandungen bzw. Flächen der Schichtelemente und ihrer Wellentäler sowie Wellenberge verfügen die Rieselkörper über einen geringeren Strömungswiderstand und sind außerdem blickdicht und lassen keinen oder nur einen geringen Lichtdurchtritt durch.

Bei einer bevorzugten Ausgestaltung des Rieselkörpers sind die Wellentäler und Wellenberge seiner Schichtelemente vorzugsweise mit einem zick-zack-förmigen und/oder schlangenlinienartigen Verlauf, versehen. Dementsprechend verlaufen die Strömungskanäle zwischen den jeweils benachbarten Schichtelementen zick-zack-förmig und/oder schlangenlinienartig. Bei einem solchen Verlauf führen die abwechselnd geschlossenen und offenen, insbesondere gitter- oder netzartigen, Flächen der Schichtelemente und/ oder der Wandungen der Wellentäler und -berge zu einem besonders geringen Strömungswiderstand und einem hohen Verdunstungsgrad.

Beim besonders vorteilhaft ausgebildeten Rieselkörper verfügen die Wellentäler und/oder Berge der Schichtelemente von jedem der gegenüberliegenden, vorzugsweise senkrechten, Längsrändern der Schichtelemente ausgehende und quer zu den Längsrändern verlaufende Außenabschnitte sowie die Außenabschnitte zur Mitte der Schichtelemente fortsetzende und/oder miteinander verbindende, gegensinnig geneigte Innenabschnitte. Die Innenabschnitte treffen sich an einer auf der Mitte des jeweiligen Schichtelements liegenden Scheitelstelle, insbesondere mittig zwischen den parallelen äußeren Längsrändern der Schichtelemente. Die Wellentäler und -berge verfügen so in ihrer Längserstreckungsrichtung gesehen über einen inneren V-förmigen Verlauf, der nach außen durch die horizontalen Außenabschnitte fortgesetzt wird. Diese Ausbildung der Wellentäler und Wellenberge, vorzugsweise die dadurch gebildeten Strömungskanäle, lassen eine besonders wirksame homogene Zufuhr von Wasser zum Inneren des jeweiligen Rieselkörpers zu. Außerdem führen diese Verläufe der Wellentäler und -berge sowie Strömungskanäle dazu, dass der Rieselkörper mindestens größtenteils lichtundurchlässig wird und man durch den Rieselkörper nicht hindurchschauen kann.

Bevorzugt ist es vorgesehen, dass sich die undurchlässigen, vorzugsweise wasserdichten, Teile der Flächen der Schichtelemente, insbesondere ihrer Wellentäler sowie Wellenberge und/oder Strömungskanäle, in mindestens einem innenliegenden Bereich der Innenabschnitte der Wellentäler sowie -berge und/oder Strömungskanäle der Schichtelemente befinden.

Vorzugsweise verlaufen die undurchlässigen innenliegenden Bereiche der Innenabschnitte über einen Großteil derselben, aber nicht über gegenüberliegende kurze Endbereiche der Innenabschnitte, insbesondere nicht im Scheitelbereich. Indem die undurchlässigen Bereiche sich über nur einen innenliegenden Großteil der Innenabschnitte erstrecken, wird verhindert, dass sich das Wasser in den tieferliegenden mittigen Scheiteln bzw. Scheitelbereichen der geneigten Innenabschnitte sammelt und dadurch den Strömungsquerschnitt verringern kann, was zu einer Vergrößerung des Strömungswiderstands, insbesondere des Durchströmungswiderstands, des Rieselkörpers führen könnte.

Bei einer bevorzugten Ausgestaltung des Rieselkörpers sind die Schichtelemente derart abwechselnd gedreht zusammengesetzt, dass die schrägen Innenabschnitte zueinanderweisender Wellentäler und -berge benachbarter Schichtelemente in entgegengesetzten Richtungen geneigt sind und/oder kreuzweise zueinander verlaufen. Das führt zu einer besonders homogenen Verteilung des zugeführten Wassers im Inneren der Rieselkörper.

Bei einem vorteilhaft weitergebildeten Rieselkörper kann es vorgesehen sein, dass die gewellten Schichtelemente aus Kunststoff gespritzt sind. Solche Schichtelemente lassen sich mit großer Genauigkeit, insbesondere gleichen Querschnitten und vor allem gleichgroßen Querschnitten, übereinanderliegender Wellentäler und -berge bilden. Außerdem verfügen die aus Kunststoff gespritzten Schichtelemente über eine größere Stabilität als das bei bekannten Rieselkörpern mit aus gewellter Folie gebildeten Schichtelementen der Fall ist. Es lassen auch durch Spritzen absolut identische Kunststoff-Schichtelemente herstellen. Im Spritzgießen hergestellte Schichtelemente können außerdem eine größere Wellungshöhe aufweisen als das bei auf andere Weise hergestellten gewellten Schichtelementen der Fall ist. Dadurch lassen sich tiefere Wellentäler und höhere Wellenberge bilden und entsprechende Querschnitte der Strömungskanäle vergrößern und/oder an die gegebenen Bedürfnisse anpassen. Schließlich führen größere Wellungshöhen der Schichtelemente zu geringeren Strömungswiderständen in den Rieselkörpern.

Bevorzugt ist es vorgesehen, dass alle Schichtelemente gleich sind und/oder alle Schichtelemente gleich ausgebildet sind, vorzugsweise alle Schichtelemente gleichermaßen aus Kunststoff gespritzt sind. Aus vielen gleichen Schichtelementen lassen sich durch einfaches Verbinden derselben durch Kleben, Schweißen, Siegeln oder dergleichen Rieselkörper mit untereinander gleiche Abmessungen aufweisenden Wellentälern und -bergen und auch im Wesentlichen identischen Strömungskanälen bilden. Das führt dazu, dass die Strömungsverhältnisse zwischen allen Schichtelementen gleich sind.

Eine vorteilhafte Ausgestaltungsmöglichkeit des Rieselkörpers zeichnet sich durch eine Wellungshöhe der Schichtelemente aus, die größer als 12 mm ist. Eine solche Wellungshöhe führt zu relativ großen Strömungsquerschnitten und dadurch verringerten Strömungswiderständen im betreffenden Rieselkörper. Das gilt insbesondere in Kombination mit Rieselkörpern, bei denen die Flächen bzw. Wandungen der Schichtelemente, Wellentäler, Wellenberge und/oder Strömungskanäle nur teilweise durchlässig, also sowohl durchlässig als auch undurchlässig, sind. Solche relativ großen Wellungshöhen lassen sich besonders gut realisieren durch die Herstellung der Schichtelemente im Spritzgussverfahren. Schließlich kann durch große Wellungshöhen die Anzahl der Schichtelemente pro Rieselelement gegenüber solchen mit gleicher Wellungshöhe verringert werden.

Besonders vorteilhaft ist es, die Wellungshöhen der Schichtelemente so zu wählen, dass sie im Bereich von 12,5 mm bis 30 mm und - was noch vorteilhafter ist - zwischen 13,5 mm und 18 mm oder 20,5 mm bis 30 mm liegen. Aus solchermaßen ausgebildeten Schichtelementen gebildete Rieselkörper verfügen insbesondere dann, wenn sie teilweise offene und teilweise geschlossene Wandungen bzw. Flächen aufweisen, über überraschend geringe Strömungswiderstände bei gleichwohl hoher Verdunstungsleistung.

Bei der Erfindung des Rieselkörpers verfügen die Wellen bzw. Wellentäler und Wellenberge über trapezförmige Querschnitte, mit gegensinnig schräggerichteten Schenkeln und einem diese verbindenden Steg. Bevorzugt ist die Wandung des Stegs jedes Wellentals und jedes Wellenbergs über die gesamte Länge jedes Wellenbergs bzw. Wellentals eines jeden Schichtelements vollständig undurchlässig, insbesondere geschlossen. Die Stege aller Wellentäler und Wellenberge liegen in zwei parallelen Ebenen, deren Abstand der Wellungshöhe des jeweiligen Schichtelements entspricht. Das sind die Ebenen, an denen benachbarte

Schichtelemente zusammenliegen und vollflächig oder bereichsweise, insbesondere punktuell, miteinander durch zum Beispiel Schweißen, Kleben und/oder Siegeln verbunden sind. Indem diese sozusagen Anlage- und Verbindungsflächen darstellenden Stege vollflächig geschlossen sind, also keine Öffnungen oder Durchbrüche aufweisen, bilden sie ausreichend große Anlagenflächen, die ein einfaches und zuverlässiges Verbinden benachbarter Schichtelemente zulassen, aber auch zu einer verhältnismäßig großen Stabilität der aus einer Mehrzahl miteinander an den geschlossenflächigen Stegen verbundenen Schichtelemente und der daraus gebildeten Rieselkörperführen.

Ein bevorzugtes Ausführungsbeispiel eines erfindungsgemäßen Rieselkörpers wird nachfolgend anhand der Zeichnung näher erläutert. In dieser zeigen:

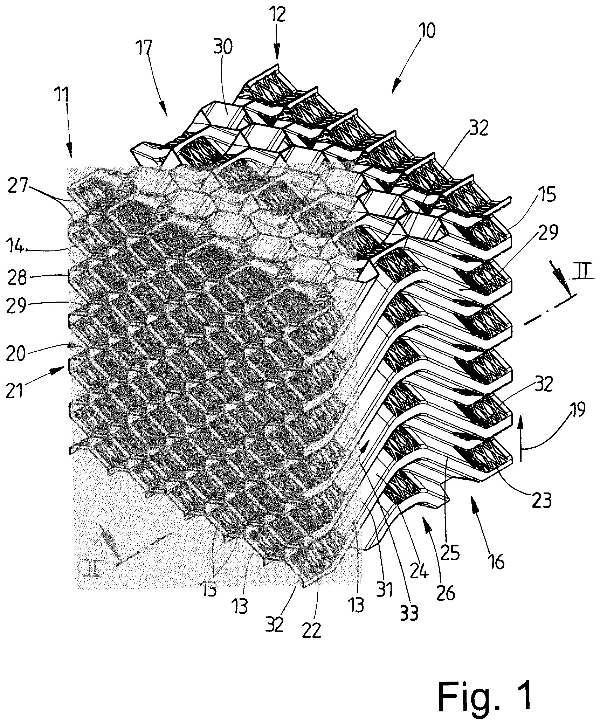

- Fig. 1: eine perspektivische Darstellung eines Ausschnitts des Rieselkörpers,
- Fig. 2: einen Querschnitt II-II durch den Rieselkörper der Fig. 1,
- Fig. 3: einen mittigen Längsschnitt durch den Rieselkörper der Fig. 1,
- Fig. 4: eine vergrößerte Einzelheit IV aus der Fig. 3,
- Fig. 5: zwei benachbarte perspektivisch dargestellte Schichtelemente des Rieselkörpers vor dem Zusammensetzen,
- Fig. 6: eine Vorderansicht eines Schichtelements, und
- Fig. 7: eine Vorderansicht eines benachbarten Schichtelements zum Schichtelement der Fig. 6.

Die Figuren zeigen ganz oder teilweise einen Rieselkörper 10 zur Klimatisierung von Gebäuden, insbesondere Ställen, nach dem Verdunstungsprinzip. Dazu wird Wasser oder gegebenenfalls auch eine andere Flüssigkeit dem Rieselkörper 10 von oben zugeführt, das dann vorzugsweise schwerkraftgetrieben durch den Rieselkörper 10 nach unten strömt. Es kann sich hierbei allein um Wasser, aber auch um ein Wasser-Luft-Gemisch, also einen Wassernebel, handeln. Das Wasser bzw. der Wassernebel werden mit entsprechendem Druck und einer dementsprechenden Strömungsgeschwindigkeit in den Rieselkörper 10 hinein und bedingt durch die Struktur des Rieselkörpers 10 im Wesentlichen homogen verteilt durch denselben hindurchgeleitet.

Der Rieselkörper 10 besteht vollständig aus Kunststoff, insbesondere thermoplastischem Kunststoff, und ist durch Kunststoff-Spritzguss mit mindestens einer Spritzgussform hergestellt.

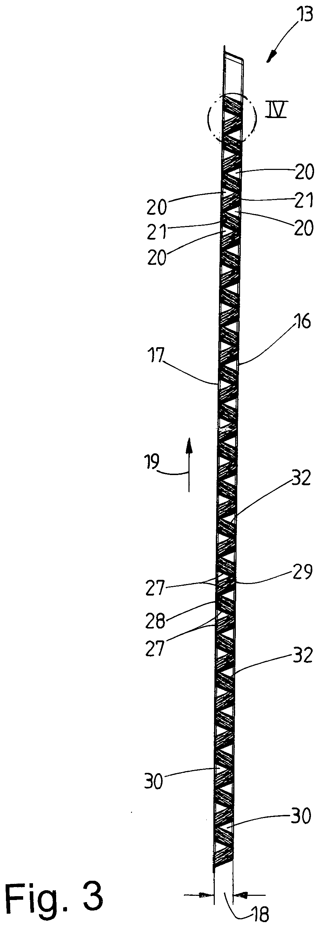

Jeder längliche und in der Regel aufrechtstehende (vgl. Fig. 3 und 5 bis 7) Rieselkörper 10 besteht aus einer Mehrzahl allesamt gleicher Schichtelemente 13 aus Kunststoff, vorzugsweise thermoplastischem Kunststoff, die jeweils einzeln im Spritzgussverfahren hergestellt sind. Zur Bildung des Rieselkörpers 10 aus den einzelnen Schichtelementen 13 sind diese nach ihrer Herstellung im Spritzgussverfahren untereinander verbunden durch Schweißen, Kleben, Siegeln oder Ähnliches. Dadurch entsteht der schichtartig und/oder sandwichartig aufgebaute Rieselkörper 10 aus mehreren hintereinanderliegend angeordneten und miteinander verbundenen Schichtelementen 13.

Die länglichen Schichtelemente 13 sind im aufrechten Zustand, also stehend, zusammengesetzt und miteinander verbunden. Dadurch verlaufen parallele Längsseitenränder 14, 15 an gegenüberliegenden Seiten der Schichtelemente 13 aufrecht, insbesondere senkrecht. Die Längsseitenränder 14, 15 aller verbundener Schichtelemente 13 liegen in bzw. auf gegenüberliegenden, parallelen Längsseitenebenen 11 und 12 des Rieselkörpers 10.

Das jeweilige Schichtelement 13 ist strukturiert und/oder profiliert ausgebildet. Im gezeigten Ausführungsbeispiel ist das jeweilige Schichtelement 13 gewellt ausgebildet. Jedes Schichtelement 13 erhält dadurch eine dreidimensionale Struktur mit einer vorderen Ebene 16 und einer rückwärtigen Ebene 17. Beide Ebenen 16 und 17 jedes Schichtelements 13 verlaufen mit parallelem Abstand zueinander, wobei vorzugsweise der Abstand der Ebenen 16, 17 unter Abzug der Wandstärke des Schichtelements 13 der Wellungshöhe 18 des jeweiligen Schichtelements 13 entspricht.

Die Wellung der Schichtelemente 13 erfolgt in Längserstreckungsrichtung 19 des Rieselkörpers 10, also von oben nach unten. Dadurch folgen in Längserstreckungsrichtung 19 Wellentäler 20 und Wellenberge 21 abwechselnd aufeinander. Bei der hier gezeigten Orientierung des Rieselkörpers 10 folgt jeweils über einem Wellental 20 ein Wellenberg 21. Darüber befindet sich dann wieder ein Wellental 20 und so weiter. Eine Wellenlängsrichtung 33 der Wellentäler 20 und der Wellenberge 21 verläuft zumindest teilweise quer zur Längserstreckungsrichtung 19, also durchgehend zwischen den Längsseitenrändern 14 und 15 der Schichtelemente 13 und somit zwischen den Längsseitenebenen 11 und 12 der Rieselkörper 10.

Die Wellentäler 20 und Wellenberge 21 können grundsätzlich einen beliebigen Verlauf aufweisen. Beim gezeigten Rieselkörper 10 sind die Wellentäler 20 und die benachbarten Wellenberge 21 in ihrer quer zur Längserstreckungsrichtung 19 des Rieselkörpers 10 verlaufenden Wellenlängsrichtung 33 mit einem gewellten Verlauf versehen. Bevorzugt weisen die Wellentäler 20 und Wellenberge 21 einen gleichen zick-zack-förmigen oder schlangenlinienartigen Verlauf auf.

Beim gezeigten Rieselkörper 10 weist jedes Wellental 20 genauso wie jeder Wellenberg 21 zwei insbesondere gleiche Außenabschnitte 22 und 23 sowie zwei auch vorzugsweise gleiche Innenabschnitte 24 und 25 auf. Ein Außenabschnitt 22 des Wellentals 20 bzw. Wellenbergs 21 geht aus von der Längsseitenebene 11 des Rieselkörpers 10, während der gegenüberliegende Außenabschnitt 22 an der gegenüberliegenden anderen Längsseitenebene 12 des Rieselkörpers 10 beginnt. Die Außenabschnitte 22 und 23 verlaufen senkrecht zu der Längsseitenebene 12, 13, also bei aufrechtstehendem Rieselkörper 10 horizontal gerichtet.

Innenseitig ist jeder Außenabschnitt 22 und 23 fortgesetzt von einem schrägen Innenabschnitt 24 bzw. 25, der entweder schräg aufwärtsgerichtet oder schräg abwärtsgerichteten verläuft. Die von den gegenüberliegenden Außenabschnitten 22 und 23 ausgehenden Innenabschnitte 24 und 25 sind gegensinnig geneigt, aber in gleichem Maße, beispielsweise um 20° bis 60° zur horizontalen bzw. zum Außenabschnitt 22, 23, vorzugsweise 30° bis 50°, insbesondere etwa 40°. Die Innenabschnitte 24 und 25 von gegenüberliegenden Seiten des Rieselkörpers 10 treffen sich in der mittig zwischen den Längsseitenebenen 11 und 12 des Rieselkörpers 10 liegenden aufrechten Längsmittelebene desselben. Hier befindet sich ein Scheitel 26 jedes zwischen den Längsseitenebenen 11 und 12 des Rieselkörpers 10 schlangenlinienartig bzw. zick-zack-förmig verlaufenden Wellentals 20 und Wellenbergs 21. Gleichzeitig befindet sich im sich auf der Längsmittelebene des Rieselkörpers 10 befindenden Scheitel 26 die höchste bzw. tiefste Stelle des jeweiligen Wellentals 20 und Wellenbergs 21.

Die Übergänge zwischen den Außenabschnitten 22 und 23 und den daran anschließenden Innenabschnitten 24 und 25 sowie zwischen den sich in der Längsmittelebene des Rieselkörpers 10 treffenden Innenabschnitte 24, 25 der Wellentäler 20 und Wellenberge 21 sind im gezeigten Ausführungsbeispiel gerundet.

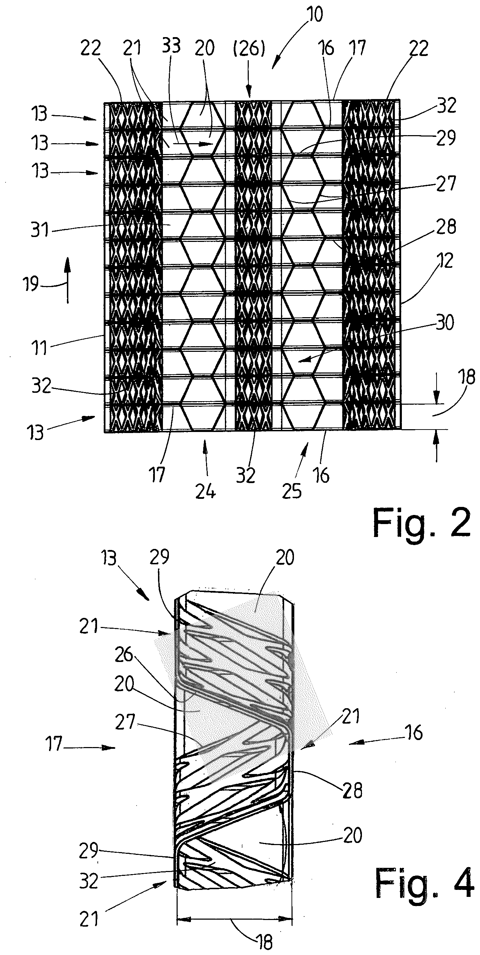

Die Wellung des jeweiligen Schichtelements 13, insbesondere der Querschnitt jedes Wellentals 20 und Wellenbergs 21, sind gleichermaßen trapezartig ausgebildet durch gegensinnig gleichermaßen schräggerichtete Schenkel 27. Jeweils zwei Schenkel 27 begrenzen gegenüberliegende Seiten eines Wellentals 20 und Wellenbergs 21. Verbunden sind die Schenkel 27 an der höchsten Stelle des jeweiligen Wellenbergs 21 durch einen Steg 28 und an der tiefsten Stelle des jeweiligen Wellentals 20 durch einen Steg 29. Die gegenüberliegenden Schenkel 27 konvergieren in Richtung zum Steg 28 bzw. 29, so dass die Breite jedes Wellenbergs 21 zum Steg 28 abnimmt und auch die Breite jedes Wellentals 20 zum Steg 29 abnimmt (Fig. 4). Die Stege 29 aller Wellentäler 20 liegen in einer gemeinsamen Ebene, und zwar im gezeigten Ausführungsbeispiel auf der vorderen Ebene 16 des jeweiligen Schichtelements 13. Demgegenüber liegen die Stege 28 sämtlicher Wellenberge 21 des betreffenden Schichtelements 13 gemeinsam in der hinteren Ebene 17 desselben (Fig. 4). Dadurch bilden zumindest Teile oder Abschnitte der Stege 28 und 29 Anlageflächen zur Verbindung benachbarter, gleich ausgebildeter Schichtelemente 13. Dabei geben die Abstände der Stege 28 und 29 der vorderen Ebene 16 und der hinteren Ebene 17 die Wellungshöhen 18 der Schichtelemente 13 und somit auch die Tiefe des jeweiligen Wellentals 20 bzw. Höhe des jeweiligen Wellenbergs 21 vor.

Die Wellungshöhe 18 jedes Schichtelements 14, also die lichte bzw. innere Tiefe jedes Wellentals 20 und/oder jedes Wellenbergs 21, beträgt beim gezeigten Rieselkörper 10 etwa 14 mm. Sie kann aber auch größer oder kleiner sein, und zwar 13,5 mm bis 18 mm betragen, gegebenenfalls sogar im Bereich von 12,5 mm bis 30 mm liegen.

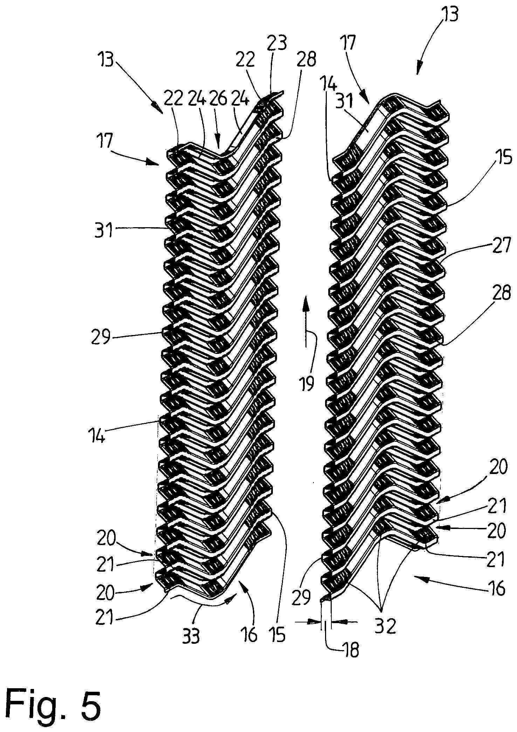

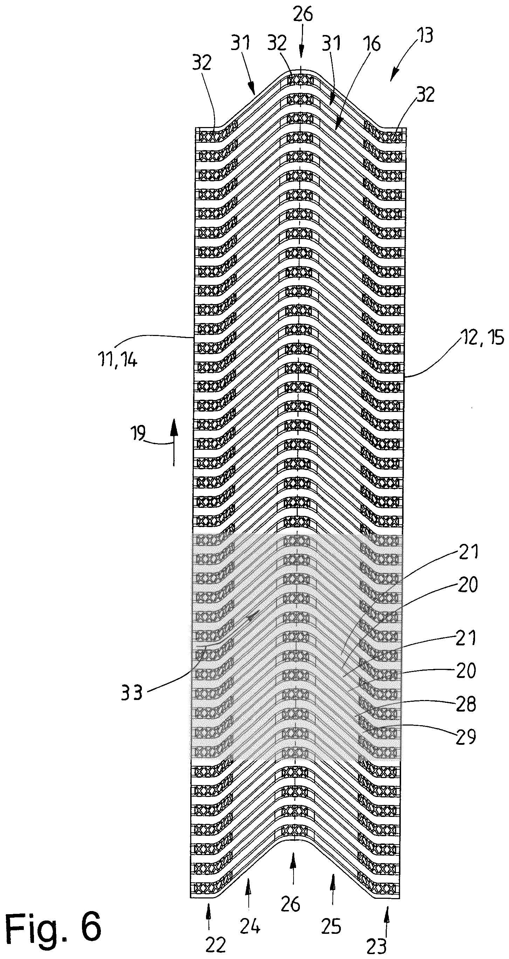

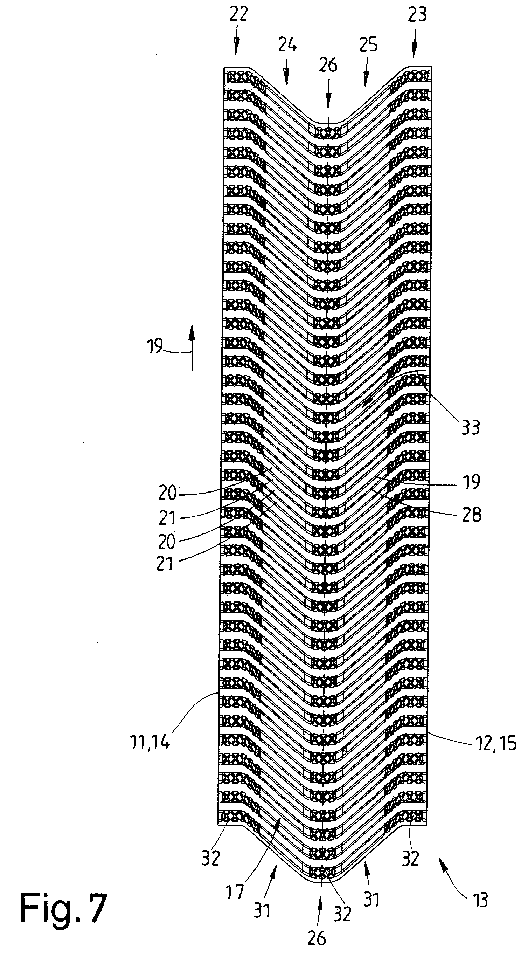

Beim hier gezeigten Rieselkörper 10 folgen die einzelnen Schichtelemente 13 in wechselnder Orientierung aufeinander. Es ist immer jeweils zwischen zwei gleich orientierten Schichtelementen 13 ein umgedrehtes Schichtelement 13 angeordnet (Fig. 5). Mit anderen Worten folgt auf jedes Schichtelement 13, das so herum orientiert ist, wie in den Fig. 6 dargestellt, ein um 180° umgedrehtes, aber ansonsten gleiches Schichtelement 30 gemäß der Darstellung in der Fig. 7. Umgedreht ist ein solches Schichtelement 13 um eine Normalachse durch die vordere Ebene 16 und/oder hintere Ebene 17 des betreffenden Schichtelements 13.

Dadurch, dass zwischen zwei mit gleicher Orientierung aufrechtstehenden Schichtelementen 13 ein umgedrehtes Schichtelement 13 angeordnet ist, liegen die auf der Längsmittelebene des Rieselkörpers 10 sich befindenden Scheitel 26 der Wellentäler 20 und der Wellenberge 21 bezogen auf ihre Wellenlängsrichtung 33 abwechselnd bzw. wechselweise über den Außenabschnitten 22 und 23 und darunter. Die Folge ist, dass die gegensinnig schräggerichteten Innenabschnitte 24, 25 benachbarter Schichtelemente 13 sich kreuzen (Fig. 5). Hingegen liegen trotz der abwechselnd unterschiedlich herum aufeinanderfolgenden Schichtelemente 13 die quer zu den Längsseitenrändern 14, 15, also vorzugsweise horizontal, verlaufenden Außenabschnitte 22 und 23 der Wellentäler 20 und der Wellenberge 21 deckungsgleich hintereinander, so dass sie sich ergänzen, indem abwechselnd zwei Wellentäler 20 und zwei Wellenberge 21 aufeinanderfolgen bzw. hintereinanderliegen zur Bildung von Abschnitten von Strömungskanälen 30, die dadurch einen bienenwabenartigen, sechseckigen Querschnitt erhalten.

Aufgrund der aufeinanderfolgenden gewellten Schichtelemente 13 wird im Rieselkörper 14 ein gleichmäßiges Raster aus einer Vielzahl übereinander und hintereinanderliegender Strömungskanäle 30 gebildet. Jeder Strömungskanal 30 erstreckt sich von einer Längsseitenebene 11 durchgehend zur anderen Längsseitenebene 12 des Rieselkörpers 10. Jedoch verändern sich die Querschnitte, insbesondere Größen, der Strömungskanäle 30 in Längserstreckungsrichtung 19 der Wellentäler 20 und/oder Wellenberge 21 in den Bereichen der Innenabschnitte 24 und 25. Zum Teil, insbesondere in den Bereichen der Außenabschnitte 22, 23, wird jeder Strömungskanal 30 durch benachbarte, sich gegenüberliegende Wellentäler 20 zwischen benachbarten Schichtelementen 13 gebildet.

Im Bereich der quer zu den Längsseitenebenen 11, 12, vorzugsweise horizontal, verlaufenden Außenabschnitte 22, 23 der Wellentäler 20 entstehen größere Teile der Strömungskanäle 30 aus zwei deckungsgleich aufeinanderfolgenden, benachbarten Wellentälern 20. Diese äußeren Teile der Strömungskanäle 30 verfügen so über einen etwa sechseckigen Querschnitt. Im Bereich der Innenabschnitte 24, 25 der Wellentäler 20 benachbarter Schichtelemente 13 entstehen kleinere Teile des jeweiligen Strömungskanals 30. Diese kommen durch die abwechselnd umgedrehte Aufeinanderfolge der Schichtelemente 13 und die sich dadurch kreuzenden Innenabschnitte 24, 25 zustande. Nur an den Kreuzungsstellen der Innenabschnitte 24, 25 der Wellentäler 20 benachbarter Schichtelemente 13 überdecken sich teilweise die Wellentäler 20 benachbarter Schichtelemente 13, so dass auch hier kurze Teile größerer Strömungskanäle 30 entstehen.

Die Schichtelemente 13 verfügen zum einen Teil über geschlossene, flüssigkeitsundurchlässige Wandbereiche 31 und zum anderen Teil über durchlässige Wandbereiche 32. Die durchlässigen Wandbereiche 32 sind beim gezeigten Rieselkörper 10 netz- bzw. gitterartig ausgebildet.

Beim Rieselkörper 10 des hier beschriebenen Ausführungsbeispiels befinden sich die geschlossene Randbereich 31 im Bereich der Innenabschnitte 24, 25, vorzugsweise nur in mittleren Teilbereichen derselben. Dann sind gegenüberliegende Endbereiche der Innenabschnitte 24, 25 als durchlässige Wandbereiche 32 ausgebildet, und zwar insbesondere im Bereich der jeweiligen Scheitel 26 der Wellentäler 20 und Wellenberge 21, vorzugsweise auch kurze, an den Außenabschnitten 22 und 23 angrenzende Endbereiche der Innenabschnitte 24, 25. Im gezeigten Ausführungsbeispiel sind die Außenabschnitte 22 und 23 vollständig als durchlässige Wandbereiche 32 ausgebildet.

Die durchlässigen Wandbereiche 32 der Wellentäler 20 sowie Wellenberge 21 und/oder Strömungskanäle 30 sind nur in den gegenüberliegenden gegensinnig schräggerichteten Schenkeln 27 der Wellentäler 20 und Wellenberge 21 vorgesehen. Die Stege 28 und 29 der Wellentäler 20 und der Wellenberge 21 hingegen sind durchgehend und/oder vollflächig als geschlossene Wandbereiche 31 ausgebildet. Dadurch sind überall dort, wo sich benachbarte Schichtelemente 13 an Stegen 28 und 29 der Wellenberge 21 und Wellentäler 20 berühren, stets geschlossene Wandbereiche 31, nämlich vollflächige und nicht netzartig oder gitterartig ausgebildete Wandungen, der Schichtelemente 13 vorhanden. An diesen geschlossenen Wandungen, nämlich geschlossene Wandbereiche 31, können die benachbarten Schichtelemente 13 miteinander durch Schweißen, Siegeln und/oder Kleben dauerhaft und mit ausreichender Haltbarkeit verbunden werden, und zwar trotz der in ihrer Längserstreckungsrichtung 19 schlangenlinienförmig und/oder zick-zack-artig verlaufenden Wellentäler 20 und Wellenberge 21 sowie die wechselweise umgedrehte Aufeinanderfolge der im Übrigen gleichen Schichtelemente 13.

Infolge der allseitig geschlossenen Wandbereiche 31 mittlerer und/oder innerer Teile der Innenabschnitte 24 und 25 der Wellentäler 20 und der Wellenberge 21 werden in den Strömungskanälen 30 schräggerichtete Ablaufrinnen für von oben den Rieselkörpern 10 zugeführtes Wasser oder Wassernebel geschaffen. Infolge der abwechselnd umgekehrt aufeinanderfolgenden Schichtelemente 13 sind diese geschlossenwandigen Ablaufrinnen abwechselnd nach außen zu den durchlässige Wandbereiche 32 aufweisenden Außenabschnitten 22, 23 oder nach innen zum durchlässigen Wandbereich 32 im Bereich des jeweiligen Scheitels 26 der Innenabschnitte 24 und 25 gerichtet. Die vorgenannte Verteilung und Anordnung der geschlossenen Wandbereiche 31 einerseits und der durchlässigen Wandbereiche 32 andererseits sorgen für eine homogene Verteilung des Wassers oder des Wassernebels bei abwärtsgerichteter Durchströmung desselben durch den jeweiligen Rieselkörper 10.

Insbesondere die Fig. 6 und 7 zeigen das jeweilige Schichtelement 13 mit einem nach oben gewölbten oberen Querrand und einem entsprechend einwärts gewölbten unteren Querrand. Dadurch verfügen der obere Rand und der untere Rand des jeweiligen Schichtelements 13 über eine bogen- bzw. wellenförmige Wölbung und dadurch über ein durchgehendes Wellental 20 bzw. einen durchgehenden Wellenberg 21.

Es ist ein alternatives Ausführungsbeispiel eines Rieselkörpers 10 denkbar, bei dem die oberen und unteren Querränder der Schichtelemente 13 geradlinig verlaufen. Bei diesen Schichtelementen 13 ist - bildlich ausgedrückt - die hochstehende und vorspringende Wölbung am oberen Querrand quasi abgeschnitten und die einwärtsgerichtete Wölbung am unteren Querrand aufgefüllt durch das, was am oberen Querrand abgeschnitten ist. Dadurch entsteht auch ein geradliniger unterer Querrand beim jeweiligen Schichtelement 13 dieses alternativen Ausführungsbeispiels. Der aus mehreren benachbarten Schichtelementen 13 zusammengesetzte Rieselkörper 10 verfügt dann über eine plane und ebene, obere und untere Stirnfläche.

### Bezugszeichenliste

- 10: Rieselkörper
- 11: Längsseitenebene
- 12: Längsseitenebene
- 13: Schichtelement
- 14: Längsseitenrand
- 15: Längsseitenrand
- 16: vordere Ebene
- 17: hintere Ebene
- 18: Wellungshöhe
- 19: Längserstreckungsrichtung
- 20: Wellental
- 21: Wellenberg
- 22: Außenabschnitt
- 23: Außenabschnitt
- 24: Innenabschnitt
- 25: Innenabschnitt
- 26: Scheitel
- 27: Schenkel
- 28: Steg
- 29: Steg
- 30: Strömungskanal
- 31: geschlossener Wandbereich
- 32: durchlässiger Wandbereich
- 33: Wellenlängsrichtung

## Patentansprüche

1. Rieselkörper zur Klimatisierung von Gebäuden, vorzugsweise Ställen, mit einer Mehrzahl von miteinander verbundenen Schichtelementen (13), die zur Bildung abwechselnd benachbarter Wellentäler (20) und Wellenberge (21) gewellt sind und mit Strömungskanälen (30) zwischen jeweils benachbarten gewellten Schichtelementen (13), wobei die Schichtelemente (13) zum einen Teil geschlossenwandig und zum anderen Teil durchlässig ausgebildet sind zur Bildung teilweise geschlossener und teilweise durchlässiger Strömungskanäle (30) und/oder Wellentäler (20) sowie Wellenberge (20) zwischen benachbarten Schichtelementen (13), **dadurch gekennzeichnet, dass** die Wellentäler (20) und Wellenberge (21) der Schichtelemente (13) mit einem mehrere Richtungsänderungen aufweisenden Verlauf in ihrer Längserstreckungsrichtung (19) versehen sind, dass alle Wellentäler (20) und/oder Wellenberge (21) der Wellen des jeweiligen Schichtelements (13) trapezförmige Querschnitte mit jeweils zwei gegensinnig schräg geneigten Schenkeln (27), die durch einen gemeinsamen Steg (28, 29) verbunden sind, aufweisen, wobei nur die Schenkel (27) der Wellentäler (20) und/oder Wellenberge (21) zum Teil durchlässig ausgebildet sind und die durchlässig ausgebildeten Teile der Strömungskanäle (30) und/oder Wellentäler (20) sowie Wellenberge (21) der benachbarten Schichtelemente (13) netz- und/oder gitterartig ausgebildet oder durch eine Netz- und/oder Gitterstruktur gebildet sind.

2. Rieselkörper nach Anspruch 1, **dadurch gekennzeichnet, dass** Längserstreckungsrichtungen (19) der vorzugsweise abwechselnd benachbarten, insbesondere übereinanderliegenden, Wellentäler (20) und Wellenberge (21) quer zu den Schichtelementen (13) verlaufen, insbesondere durchgehend zwischen parallelen Längsseitenrändern (14, 15) der Schichtelemente (13).

3. Rieselkörper nach Anspruch 1 oder 2, **dadurch gekennzeichnet, dass** die Wellentäler (20) und Wellenberge (21) der Schichtelemente (13) mit einem mehrere Richtungsänderungen aufweisenden zick-zack- und/oder schlangenlinienartigen Verlauf in ihrer Längserstreckungsrichtung (19) versehen sind.

4. Rieselkörper nach einem der vorhergehenden Ansprüche, **dadurch gekennzeichnet, dass** die Wellentäler (20) und Wellenberge (21) der Schichtelemente (13) von jedem der gegenüberliegenden Längsseitenrändern (14, 15) der Schichtelemente (13) ausgehenden und quer zu den Längsseitenrändern (14, 15) verlaufende Außenabschnitte (22, 23) und die Außenabschnitte (22, 23) zur Mitte der Schichtelemente (23) fortsetzende, gegensinnig geneigte Innenabschnitte (24, 25) aufweisen, wobei die Innenabschnitte (24, 25) sich im Bereich von auf einer Längsmittelebene der Schichtelemente (13) liegenden Scheiteln (26) treffen.

5. Rieselkörper nach einem der vorhergehenden Ansprüche, **dadurch gekennzeichnet, dass** undurchlässige, geschlossene Wandbereiche (31) der Strömungskanäle (30) und/oder Wellentäler (20) sowie Wellenberge (21) sich über einen innenliegenden Bereich der Innenabschnitte (24, 25) der Wellentäler (20) und Wellenberge (21) der Schichtelemente (13) und/oder Strömungskanäle (30) der Schichtelemente (13) erstrecken.

6. Rieselkörper nach einem der vorhergehenden Ansprüche, **dadurch gekennzeichnet, dass** die Schichtelemente (13) derart abwechselnd gedreht zusammengesetzt sind, dass die schrägen Innenabschnitte (24, 25) zueinander weisender Wellentäler (20) und Wellenberge (21) benachbarter Schichtelemente (13) in entgegengesetzten Richtungen geneigt sind und/oder kreuzartig zueinander verlaufen.

7. Rieselkörper nach einem der vorhergehenden Ansprüche, **dadurch gekennzeichnet, dass** die Wellen der Schichtelemente (13), insbesondere ihre Wellentäler (20) und ihre Wellenberge (21), trapezartige Querschnitte aufweisen, wobei vorzugsweise auf parallelen Ebenen, insbesondere einer vorderen Ebene (16) und einer hinteren Ebene (17), der Schichtelemente (13) liegende Stege (28, 29) der Wellen, Wellentäler (20) und/oder Wellenberge (21) durchgehend geschlossen bzw. geschlossenwandig ausgebildet sind.

8. Rieselkörper nach einem oder mehreren der Ansprüche 1 bis 7, **dadurch gekennzeichnet, dass** die gewellten Schichtelemente (13) aus Kunststoff gespritzt sind.

9. Rieselkörper nach einem der vorhergehenden Ansprüche, **dadurch gekennzeichnet, dass** alle Schichtelemente (13) gleich und/oder gleich ausgebildet sind, vorzugsweise alle aus Kunststoff gespritzten Schichtelemente (13) gleich oder gleich ausgebildet sind.

10. Rieselkörper nach einem oder mehreren der Ansprüche 1 bis 9, **dadurch gekennzeichnet, dass** die Wellungshöhen (18) der Schichtelemente (13) größer als 12 mm, vorzugsweise größer als 20 mm, sind.

11. Rieselkörper nach einem der vorhergehenden Ansprüche, **dadurch gekennzeichnet, dass** die Wellungshöhen (18) der Schichtelemente (13) 12,5 mm bis 30 mm betragen, vorzugsweise 13,5 mm bis 18 mm oder 20,5 mm bis 30 mm.

## Claims

1. A trickle body for the air conditioning of buildings, preferably animal housings, having a plurality of mutually connected layer elements (13), which are corrugated to form alternately adjacent wave troughs (20) and wave peaks (21), and having flow channels (30) between respectively adjacent corrugated layer elements (13), wherein the layer elements (13) are, for the one part, of closed-wall configuration and, for the other part, of permeable configuration, to form partially closed and partially permeable flow channels (30), and/or wave troughs (20) and wave peaks (20), between adjacent layer elements (13), **characterized in that** the wave troughs (20) and wave peaks (21) of the layer elements (13) are provided with a course of their direction of longitudinal extent (19), which course has several changes of direction, **in that** all wave troughs (20) and/or wave peaks (21) of the waves of the respective layer element (13) have trapezoidal cross sections having respectively two oppositely obliquely inclined side members (27), which are connected by a common web (28, 29), wherein only the side members (27) of the wave troughs (20) and/or wave peaks (21) are in part of permeable configuration and the permeably configured parts of the flow channels (30) and/or wave troughs (20) and wave peaks (21) of the adjacent layer elements (13) are of meshed and/or latticed configuration or are formed by a mesh and/or lattice structure

2. The trickle body as claimed in claim 1, **characterized in that** directions of longitudinal extent (19) of the preferably alternately adjacent wave troughs (20) and wave peaks (21), in particular lying one above the other, run transversely to the layer elements (13), in particular continuously between parallel longitudinal side edges (14, 15) of the layer elements (13).

3. The trickle body as claimed in claim 1 or 2, **characterized in that** the wave troughs (20) and wave peaks (21) of the layer elements (13) are provided with a course of direction of longitudinal extent (19), which course has several changes of direction running in a zigzag and/or serpentine manner.

4. The trickle body as claimed in one of the preceding claims, **characterized in that** the wave troughs (20) and wave peaks (21) of the layer elements (13) have outer portions (22, 23), which emanate from each of the opposite longitudinal side edges (14, 15) of the layer elements (13) and run transversely to the longitudinal side edges (14, 15), and the outer portions (22, 23) have oppositely inclined inner portions (24, 25) which continue to the middle of the layer elements (23), wherein the inner portions (24, 25) meet in the region of apices (26) lying on a longitudinal centre plane of the layer elements (13).

5. The trickle body as claimed in one of the preceding claims, **characterized in that** impermeable, closed wall regions (31) of the flow channels (30) and/or wave troughs (20) and wave peaks (21) extend over an inner region of the inner portions (24, 25) of the wave troughs (20) and wave peaks (21) of the layer elements (13) and/or flow channels (30) of the layer elements (13).

6. The trickle body as claimed in one of the preceding claims, **characterized in that** the layer elements (13) are assembled such that they are alternately turned in such a way that the oblique inner portions (24, 25) of mutually facing wave troughs (20) and wave peaks (21) of adjacent layer elements (13) are inclined in opposite directions and/or run in cross-cross arrangement.

7. The trickle body as claimed in one of the preceding claims, **characterized in that** the waves of the layer elements (13), in particular their wave troughs (20) and their wave peaks (21), have trapezoidal cross sections, wherein webs (28, 29) of the waves, wave troughs (20) and/or wave peaks (21), which webs preferably lie on parallel planes, in particular a front plane (16) and a rear plane (17), of the layer elements (13), are of continuously closed or close-walled configuration.

8. The trickle body as claimed in one or more of preceding claims 1 to 7, **characterized in that** the corrugated layer elements (13) are injection moulded from plastic.

9. The trickle body as claimed in one of the preceding claims, **characterized in that** all layer elements (13) are the same and/or configured the same, preferably all layer elements (13) injection moulded from plastic are the same or configured the same.

10. The trickle body as claimed in one or more of the claims 1 to 9, **characterized in that** the corrugation heights (18) of the layer elements (13) are greater than 12 mm, preferably greater than 20 mm.

11. The trickle body as claimed in one of the preceding claims, **characterized in that** the corrugation heights (18) of the layer elements (13) measure 12.5 mm to 30 mm, preferably 13.5 mm to 18 mm or 20.5 mm to 30 mm.

## Revendications

1. Corps de ruissellement destiné à la climatisation de bâtiments, de préférence de locaux pour animaux d'élevage, ledit corps d'arrosage comportant une pluralité d'éléments en couches (13) reliés entre eux, qui sont ondulés pour former des creux (20) et des sommets (21) alternativement adjacents, et des canaux d'écoulement (30) situés chacun entre des éléments de couche ondulés adjacents (13), les éléments de couche (13) étant conçus d'une part comme des parois fermées et d'autre part pour être perméables afin de former des canaux d'écoulement (30) et/ou des creux (20) et des sommets (20) partiellement fermés et partiellement perméables entre des éléments de couche adjacents (13), **caractérisé en ce que** les creux (20) et les sommets (21) des éléments de couche (13) sont prévus avec un tracé présentant plusieurs changements de direction dans leur extension longitudinale (19) de sorte que tous les creux (20) et/ou sommets (21) de l'élément de couche respectif (13) aient des sections transversales trapézoïdales comportant chacune deux branches (27) inclinées dans des sens opposés et reliées par une nervure commune (28, 29), seules les branches (27) des creux (20) et/ou des sommets (21) étant partiellement perméables et les parties perméables des canaux d'écoulement (30) et/ou des creux (20) et des sommets (21) des éléments de couche adjacents (13) étant conçus comme un réseau et/ou une grille ou étant formés par une structure réticulaire et/ou grillagée.

2. Corps de ruissellement selon la revendication 1, **caractérisé en ce que** les extensions longitudinales (19) des creux (20) et des sommets (21) de préférence alternativement adjacents, en particulier superposés, s'étendent transversalement aux éléments de couche (13), notamment de manière continue entre les bords latéraux longitudinaux parallèles (14, 15) des éléments de couche (13).

3. Corps de ruissellement selon la revendication 1 ou 2, **caractérisé en ce que** les creux (20) et les sommets (21) des éléments de couche (13) présentent dans leur extension longitudinale (19) un tracé en zigzag et/ou en serpentin qui comporte plusieurs changements de direction.

4. Corps de ruissellement selon l'une des revendications précédentes, **caractérisé en ce que** les creux (20) et les sommets (21) des éléments de couche (13) comportent des portions extérieures (22, 23) partant de chacun des bords latéraux longitudinaux opposés (14, 15) des éléments de couche (13) et s'étendant transversalement aux bords latéraux longitudinaux (14, 15) et les portions extérieures (22, 23) comportent des portions intérieures (24, 25) inclinées dans le sens opposé et s'étendant vers le milieu des éléments de couche (23), les portions intérieures (24, 25) se rejoignant dans la zone de sommets (26) situés dans un plan médian longitudinal des éléments de couche (13).

5. Corps de ruissellement selon l'une des revendications précédentes, **caractérisé en ce que** des zones de paroi fermées et imperméables (31) des canaux d'écoulement (30) et/ou des creux (20) et des sommets (21) s'étendent sur une zone intérieure des portions intérieures (24, 25) des creux (20) et des sommets (21) des éléments de couche (13) et/ou des canaux d'écoulement (30) des éléments de couche (13).

6. Corps de ruissellement selon l'une des revendications précédentes, **caractérisé en ce que** les éléments de couche (13) sont assemblés en étant tournés de manière alternée de telle sorte que les portions intérieures obliques (24, 25) de creux (20) et de sommets (21), dirigés l'un vers l'autre, d'éléments de couche adjacents (13) sont inclinées dans des sens opposés et/ou s'étendent en croix les uns par rapport aux autres.

7. Corps de ruissellement selon l'une des revendications précédentes, **caractérisé en ce que** les ondulations des éléments de couche (13), notamment leurs creux (20) et leurs sommets (21), ont des sections transversales trapézoïdales, de préférence des nervures (28, 29) des ondulations, creux (20) et/ou sommets (21) qui sont situées dans des plans parallèles, en particulier un plan avant (16) et un plan arrière (17), des éléments de couche (13), étant fermées de manière continue ou étant conçues avec des parois fermées.

8. Corps de ruissellement selon une ou plusieurs des revendications 1 à 7, **caractérisé en ce que** les éléments de couche ondulés (13) sont moulés par injection à partir d'une matière synthétique.

9. Corps de ruissellement selon l'une des revendications précédentes, **caractérisé en ce que** tous les éléments de couche (13) sont identiques et/ou conçus de manière identique, de préférence tous les éléments de couche (13) moulés par injection à partir d'une matière synthétique sont identiques ou conçus de manière identique.

10. Corps de ruissellement selon une ou plusieurs des revendications 1 à 9, **caractérisé en ce que** les hauteurs d'ondulation (18) des éléments de couche (13) sont supérieures à 12 mm, de préférence supérieures à 20 mm.

11. Corps de ruissellement selon l'une des revendications précédentes, **caractérisé en ce que** les hauteurs d'ondulation (18) des éléments de couche (13) vont de 12,5 mm à 30 mm, de préférence de 13,5 mm à 18 mm ou de 20,5 mm à 30 mm.
